# EUROPÄISCHE PATENTSCHRIFT

(11) **EP 1 057 109 B1**
(45) Veröffentlichungstag und Bekanntmachung des Hinweises auf die Patenterteilung: **14.11.2001**
(21) Anmeldenummer: 99915491.7
(22) Anmeldetag: 17.02.1999
(51) Int. Cl.: G06F 11/16

(54) **SYNCHRONISATIONS- UND/ODER DATENAUSTAUSCHVERFAHREN FÜR SICHERE, HOCHVERFÜGBARE RECHNER UND HIERZU GEEIGNETE EINRICHTUNG**
SYNCHRONISATION AND/OR DATA EXCHANGE METHOD FOR SECURE, FAULT-TOLERANT COMPUTERS AND CORRESPONDING DEVICE
PROCEDE DE SYNCHRONISATION ET/OU D'ECHANGE DE DONNEES POUR ORDINATEURS SECURISES INSENSIBLES AUX DEFAILLANCES, ET DISPOSITIF APPROPRIE A CET EFFET

(30) Priorität: 25.02.1998 DE 19809089
(43) Veröffentlichungstag der Anmeldung: 06.12.2000
(73) Patentinhaber: SIEMENS AKTIENGESELLSCHAFT, 80333 München (DE)
(72) Erfinder: Dr. Schmerbeck, Friedrich, 38159 Vechelde (DE)
(86) Internationale Anmeldenummer: DE9900498
(87) Internationale Veröffentlichungsnummer: WO9944135

(56) Entgegenhaltungen:
- EP-A- 0 075 278
- EP-A- 0 286 856
- WO-A-93/25966
- US-A- 5 226 152

## Beschreibung

Die Erfindung betrifft ein Synchronisations- und/oder Datenaustauschverfahren für sichere, hochverfügbare Rechner in einem Mehrrechnersystem mit mindestens zwei parallel arbeitenden Rechnerkanälen, die mindestens ihre Ergebnisse durch gegenseitigen Vergleich auf Übereinstimmung überprüfen und innerhalb ihres Programmablaufes Interruptsignale für den Ergebnisvergleich aussenden sowie eine Einrichtung zur Durchführung des Verfahrens.

Bei der Abarbeitung von Steuerungs- bzw. Regelungsaufgaben finden zur Gewährleistung der Sicherheit und zur Erhöhung der Verfügbarkeit Mehrrechnersysteme Anwendung. Auf diesen einzelnen Rechnern laufen Programme ab, die in ihrer Ausführung synchronisiert werden, wobei an den Synchronisationspunkten Ergebnisse bzw. Zwischenergebnisse der Programme verglichen oder anderweitig geeignet geprüft werden. Dazu gibt es prinzipiell zwei bekannte Varianten, die Hardwaresynchronisation und die Softwaresynchronisation.

Bei dem Verfahren der Hardwaresynchronisation wird durch Zusatzlogik auf den Rechnern eine enge Kopplung der Rechner erreicht, die eine Takt- oder Befehlssynchronität oder eine Pfadgleichheit erzeugt.
Die DE-AS 24 13 401 beschreibt solch eine Einrichtung zum Synchronisieren dreier Rechner, wobei Verzögerungsglieder eingesetzt werden, die die Verarbeitungszeit langsamer Rechner berücksichtigen. Bei diesem System kann der Ausfall eines Rechners nicht erkannt werden, da die Entscheidung zur Fortführung des Ablaufprogrammes als Majoritatsentscheidung "Zwei von Drei" gefällt wird.

Bei anderen bekannten Systemen, wie beispielsweise in der DE-AS 21 55 159 beschrieben, wird eine spezielle Logikschaltung eingesetzt, die die spezifischen herangezogenen Impulse auswertet und die entsprechenden Signale zur weiteren Gestaltung des Funktionsablaufes für die Rechner erzeugt. So wird die Synchronisation von Zählern mehrerer Rechner herbeigeführt, indem ein Synchronisationssignal auf eine allen Rechnern gemeinsame Leitung abgegeben und über eine Logikschaltung innerhalb der einzelnen Rechner das Erreichen einer bestimmten Zählstellung gewährleistet wird. Die Zielstellung ist hierbei wiederum darauf gerichtet, Redundanz innerhalb des Systems zu schaffen, da für die Aufrechterhaltung des Funktionsablaufes des Steuerungssystems Vergleichsergebnisse von zwei der drei Rechner genügen. Der Ausfall eines Rechners wird nicht spezifiziert. Bei den hier genannten Beispielen wird die Entscheidung zur Synchronität der Rechner über Hardwarelösungen herbeigeführt, die den Nachteil haben, daß eine spezielle Bauart der Rechner erforderlich ist und somit der Einsatz von zukaufbaren CPU-Platinen als Rechner und marktüblichen Betriebssystemen verhindert oder erschwert wird.

Bei dem Verfahren der Softwaresynchronisation wird eine lose Kopplung der Rechner durch einen programmierten Datenaustausch zwischen den Rechnern über Kommunikationskanäle erreicht. Die Synchronisationsaufgabe ist von vornherein im Programm eingebunden und wird nicht extern, außerhalb des Programmes, abgearbeitet.
Solche Lösungen ermöglichen prinzipiell den Einsatz von zukaufbaren Rechnerkomponenten und ebenfalls von zukaufbaren marktüblichen Betriebssystemen. Die Rechenleistung des daraus gebauten sicheren bzw. hochverfügbaren Rechners ist jedoch unbefriedigend, da für den zur Synchronisation notwendigen Ergebnisvergleich ein hoher Anteil der zur Verfügung stehenden Zeit notwendig ist und der Zeitanteil für die eigentliche Steueraufgabe damit reduziert wird.

Eine solche Lösung wird in der DE-OS 34 31 169 beschrieben, wo die Eingangsinformation von mehreren Rechnern, insbesondere Mikrorechnern mit internen Taktgebern, abschnittsweise verarbeitet wird und die Zwischenergebnisse einem Vergleich unterzogen werden. Die Synchronisation der Rechner zum Vergleich wird durch programmäßig erzeugte Interruptsignale ausgelöst. Der schnellste Rechner sendet als erster das Interruptsignal an die anderen Rechner und wartet die Weiterführung des nächsten Programmschrittes ab, bis die anderen Rechner ihrerseits Interruptsignale abgesendet haben. Der Start der Rechner für den nächsten Programmschritt erfolgt erst nach Eingang und Verarbeitung des letzten Interruptsignales.

Das Dokument WO 93 25 966 offenbart ein Verfahren zur Synchronisation von Betriebszuständen der einzelnen Rechner eines Mehrrechnensystems.

Der Erfindung liegt die Aufgabe zugrunde, ein Verfahren und eine Einrichtung zu schaffen, mit welchen die Routinen beim Betrieb von Mehrrechnersystemen, die zur Synchronisation bzw. dem Datenaustausch notwendig sind, verkürzt werden und somit die Leistungsfähigkeit der hochverfügbaren Rechner unter Verbesserung der Sicherheit und Zuverlässigkeit gesteigert wird.

Diese Aufgabe wird erfindungsgemäß gelöst durch die Merkmale im kennzeichnenden Teil der Ansprüche 1 und 6 im Zusammenwirken mit den Merkmalen im jeweiligen Oberbegriff. Vorteilhafte und zweckmäßige Ausgestaltungen der Erfindung sind in den Unteransprüchen enthalten.

Die verbundenen Einzelrechner des hochverfügbaren Rechnersystems werden im folgenden Rechnerkanäle genannt. Ein besonderer Vorteil der Erfindung besteht darin, daß durch die erfindungsgemäße Konfiguration, insbesondere durch die direkte zur Verfügungstellung eines Speicherbereiches von adressierbaren Speicherzellen für die einzelnen Rechnerkanäle, flexiblere und schnellere Varianten des Synchronisationsvergleiches und/oder des Datenaustausches an bestimmten Programmstellen bei Einsatz von Industrie-Standard-Rechnern möglich werden, wobei folgende Verfahrensschritte ablaufen:
- zuordnen von Speicherbereichen ( Z 1,......Z n ) mindestens eines rechnerexternen Kopplungsboards (K) zu den Rechnerkanälen (R1,....,Rn),
- identifizieren von mindestens einem Synchronisations- und/oder Datenaustauschpunkt im Programmablauf jedes Rechnerkanals (R1,....,Rn) und Vergabe einer dazugehörigen Zellenadresse,
- abgeben eines Interruptsignals durch jeden Rechnerkanal (R1,....,Rn) bei Erreichen eines Synchronisations- und/oder Datenaustauschpunktes,
- einschreiben einer laufenden Ereignisnummer und des Dateninhaltes des Ereignisses in eine dem jeweiligen Rechnerkanal (R1,...., Rn) durch die Zellenadresse zugeordnete, bezeichnete Speicherzelle (Zpl..., Zpn) des Kopplungsboards (K),
- prüfen der entsprechenden Speicherzellen (Zp) der Rechnerkanäle ( R ) auf Vorhandensein übereinstimmender Ereignisnummern,
- lesen der Speicherzellen (Zp) aller Rechnerkanäle (R1, ...., Rn), vergleichen untereinander und voten,
- fortsetzen des Programmablaufes der Rechnerkanäle (R1,....,Rn) und/oder Alarmauslösung in Abhängigkeit vom Votingergebnis.

Die erfindungsgemäße Einrichtung kann in die bestehenden Standard-Rechner problemlos integriert werden, wobei die Rechnerkanäle (R1...Rn) mit mindestens einem Kopplungsboard (K1....Kn) verbunden sind, das Kopplungsboard (K1....Kn) in n - Speicherbereiche (Z1....Zn) und jeder Speicherbereich (Z1....Zn) in mindestens n adressierbare Speicherzellen (Zp1....Zpn) unterteilt sind und jeder Speicherbereich (Z1....Zn) je einem Rechnerkanal (R1....Rn) zugeordnet ist und die Speicherbereiche (Z1....Zn) zum Ereignisvergleich von allen Rechnerkanälen (R1....Rn) lesbar aber nur von dem jeweils zugeordneten Rechnerkanal (R) beschreibbar sind.

Die Erfindung soll nachstehend anhand von zumindest teilweise in den Figuren dargestellten Ausführungsbeispielen näher erläutert werden.

Es zeigen:
- Fig. 1: eine Übersichtsdarstellung des Zusammenwirkens der Rechnerkanäle, Speicherbereiche und Speicherzellen,
- Fig. 2: eine Konfiguration mit einem gemeinsamen Kopplungsboard für alle Rechnerkanäle,
- Fig. 3: eine Konfiguration mit je einem Kopplungsboard für jeden einzelnen Rechnerkanal.

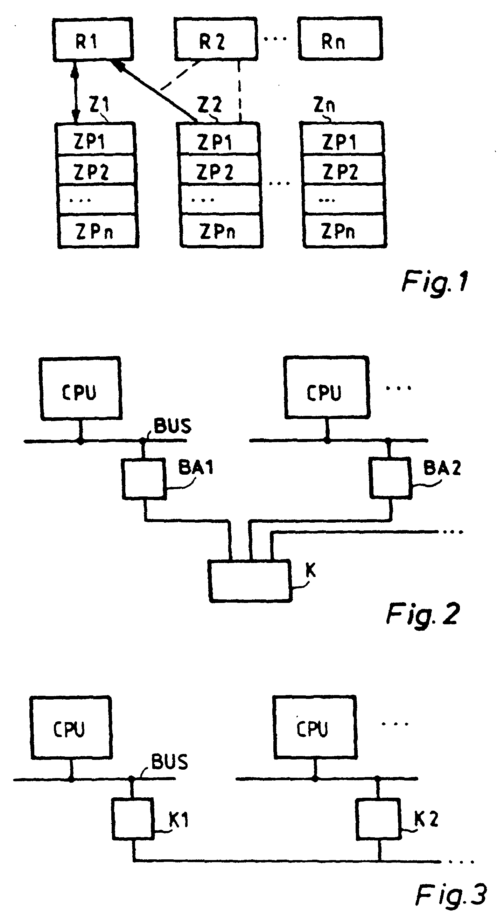

Die Einrichtung zur Synchronisation bzw. zum Datenaustausch verbindet die Rechnerkanäle R über einen internen CPU-Bus oder einen externen Bus (PCI, ISA, VME usw.) mit einem Kopplungsboard K.
Wie in Fig. 1 dargestellt ist, sind auf dem Kopplungsboard K n - Speicherbereiche Z vorhanden, die jeweils einem von n-Rechnerkanälen R zugeordnet werden. Diese Speicherbereiche Z, realisiert beispielsweise durch einen Dual-Port RAM, bestehen jeweils aus einer Menge von adressierbaren Speicherzellen Zp, die wiederum mit verschiedenen Informationen beschrieben und aus denen Informationen gelesen werden können. Eine mögliche Zuordnung gemäß einem bevorzugten Ausführungsbeispiel wäre die, daß dem Rechnerkanal R1 der Speicherbereich Z1 zugeordnet wird, dem Rechnerkanal R2 der Speicherbereich Z2, usw. bis hin zu der Zuordnung des Speicherbereiches Zn zu dem Rechnerkanal Rn.
Erfindungsgemäß kann jeder Rechnerkanal R den zugeordneten eigenen Speicherbereich Z lesen und beschreiben. Die Speicherbereiche Z der anderen Rechnerkanäle R können durch "fremde" Rechnerkanäle R nur gelesen werden. Damit soll verhindert werden, daß die Inhalte der Speicherbereiche Z durch Zugriff unberechtigter Rechnerkanäle R verändert werden können. Eine Änderung der Speicherbereichsinhalte kann nur durch den Prozeßverlauf des jeweilig dazugehörigen Rechnerkanals R durchgeführt werden. Der Zugriff auf eine komplette Speicherzelle Zp ist atomar bezüglich der Nebenläufigkeit der Rechnerkanäle R. Das heißt, wenn ein Rechnerkanal R eine Speicherzelle Zp beschreibt und ein anderer Rechnerkanal R die gleiche Speicherzelle Zp liest, sind die gelesenen Daten entweder die vor dem Schreiben oder nach dem Schreiben, nicht jedoch gemischte Daten. Jeder Rechnerkanal R kann einen Interrupt, z.B. über die vorhandenen Datenleitungen eines Bus-systems, auf die anderen Rechnerkanäle R auslösen, wobei jeder Rechnerkanal R die Möglichkeit hat, Interrupts an ihn selbst temporär oder permanent zu unterbinden.

Jede Speicherzelle Zp identifiziert einen Synchronisations- und/oder Datenaustauschpunkt, der je Rechnerkanal R parallel vorhanden ist. Die verwendete Zellenadresse ist jedem Rechnerkanal R bekannt, indem sie entweder gemeinsam vergeben oder durch geeignete Software oder Hardware zwischen den Rechnerkanälen R ausgehandelt wird.
Diese Speicherzelle Zp wird belegt mit einer zur Laufzeit eindeutigen Identifikation
(z. B. Speicherzelle Zp1 kennzeichnet Synchronisations- und/oder Datentaustauschpunkt 1 usw.) und der auszutauschenden Information bzw. einer Signatur-Information der zu synchronisierenden bzw. zu votenden Information.

Für das erfindungsgemäße Verfahren enthält das Programm der Rechnerkanäle R Programmteile, mit denen funktionell getestet werden soll, ob die Rechnerkanäle R synchron sind oder bestimmte Daten vorliegen. Erreichen die auf den parallelen Rechnerkanälen R ablaufenden Prozesse einen Synchronisations- und/oder Datentaustauschpunkt (oder werden auf den parallelen Rechnerkanälen R zu synchronisierende Messages durch dort ablaufende Prozesse erzeugt), findet folgender Ablauf statt:

Ein erster Rechnerkanal R1, der zuerst den Synchronisations- und/oder Datentaustauschpunkt innerhalb seines Programmteiles erreicht hat, ruft entsprechend der Programmierung eine Funktionsabfolge, insbesondere eine Synchronisationsroutine auf. Es wird in dem ihm zugeordneten Speicherbereich des Kopplungsboards K in der vereinbarten Speicherzelle Zp eine laufende Ereignisnummer und der Dateninhalt des Ereignisses bzw. eine entsprechende Signatur zum Dateninhalt eingetragen.

Dann wird geprüft, ob in den zugehörigen Speicherzellen Zp der Speicherbereiche Z der anderen Rechnerkanäle R ein Ereignis der gleichen Nummer eingetragen ist. Ist diese Information negativ, d. h. die anderen Rechnerkanäle R haben den Synchronisations- und/oder Datentaustauschpunkt noch nicht erreicht, geht der erste Rechnerkanal R1 in eine Warteschleife bzw. die Message wird gepuffert.

Liegt von den anderen Rechnerkanälen R die Information vor, daß sie den Synchronisations- und/oder Datentaustauschpunkt innerhalb ihres Programmteiles erreicht haben, wird ein Weckinterrupt an die anderen Rechnerkanäle R geschickt, in desser Folge alle Rechnerkanäle die zugeordneten Speicherzellen Zp1 bis Zpn ihres eigenen Speicherbereiches Z sowie auch die Speicherzellen Zp der Speicherbereiche Z der anderen Rechnerkanäle R lesen, mit den eigenen Resultaten vergleichen und voten werden. Im Ergebnis wird eine völlige Übereinstimmung oder eine den Sicherheits- und Verfügbarkeitsanforderungen entsprechende Mehrheitsübereinstimmung erwartet.

Je nach Ergebnis des Vergleiches der Speicherzellen Zp der Rechnerkanäle R wird der nächste Programmabschnitt gestartet bzw. die Message weitergeleitet oder ein Sicherheitsalarm ausgelöst. Bis zum Zeitpunkt des nächsten im Programmteil gesetzten Synchronisations- und/oder Datentaustauschpunktes wird der Interrupt für die Rechnerkanäle R verboten. Des weiteren kann z. B. der Zustand einer definierten Speicherzelle Zp beschrieben werden mit der Information, daß ein nächster Programmabschnitt aktiv, aber noch nicht synchronisiert ist.

Zusätzlich zu dem beschriebenen Verfahren kann außerdem der Austausch von Informationen erfolgen, ohne eine Synchronisation zu realisieren. Des weiteren ist der parallele oder zeitlich getrennte Ablauf von Speicherprüfprogrammen auf den Rechnerkanälen R möglich, wobei die Rechnerkanäle R die Prüfergebnisse anhand einer Signatur austauschen und so gegenseitig überwachen.

In Figur 2 ist in einem Blockschaltbild eine Konfiguration dargestellt, in der ein gemeinsames Kopplungsboard K für alle Rechnerkanäle R1 bis Rn vorgesehen ist. Zur Datenübertragung im Synchronisation- bzw. Datenaustauschfall ist jeder Rechnerkanal R1 bis Rn jeweils über sein Bussystem und jeweils einen Busadapter BA1 bis BAn bzw. direkt mit einem gemeinsamen Kopplungsboard K verbunden. In diesem Fall enthält das Kopplungsboard K die Speicherbereiche für alle Rechnerkanäle R1 bis Rn. Die Konfiguration für jeden einzelnen Rechnerkanal R mit dazugehörigem Kopplungsboard K ist anhand des Blockschaltbildes in Figur 3 gezeigt. In dieser Variante ist je Rechnerkanal R1 bis Rn ein Kopplungsboard K1 bis Kn angeschlossen, der jeweils die Speicherbereiche Z1 bis Zn für alle Rechnerkanäle R enthält. Somit sind die Speicherbereiche Z redundant vorhanden. Die Kopplungsboards K1 bis Kn sind miteinander verbunden und realisieren durch geeignete Replikationsmechanismen die Gleichheit der Daten in den Kopplungsboards K1 bis Kn.

Es ist als weiteres Ausführungsbeispiel möglich, daß der Replikationsmechanismus zeitlich verzögert erfolgt, d. h. zuerst werden die Daten von einem ersten Rechnerkanal R1 in das eigene Kopplungsboard K1 geschrieben und dann werden die Daten in die anderen n Kopplungsboards K übertragen. Die Verbindung zwischen den Kopplungsboards K1 bis Kn ist auf geeignete Weise zu realisieren (z. B. jeder mit jedem oder in der Art eines oder mehrerer Kommunikationsbusse).

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

## Patentansprüche

1. Synchronisations- und/oder Datenaustauschverfahren für sichere, hochverfügbare Rechner in einem Mehrrechnersystem mit mindestens zwei parallel arbeitenden Rechnerkanälen, die mindestens ihre Ergebnisse durch gegenseitigen Vergleich auf Übereinstimmung überprüfen und innerhalb ihres Programmablaufes Interruptsignale für den Ereignis-vergleich aussenden, **gekennzeichnet durch** die folgenden Verfahrensschritte:
- zuordnen von Speicherbereichen (Z1,...Zn) mindestens eines rechnerexternen Kopplungsboards (K) zu den Rechnerkanälen (R1,...., Rn),
- identifizieren von mindestens einem Synchronisations- und/oder Datenaustauschpunkt im Programmablauf jedes Rechnerkanals (R1, ...., Rn) und Vergabe einer dazugehörigen Zellenadresse,
- abgeben eines Interruptsignals **durch** jeden Rechnerkanal (R1,...., Rn) bei Erreichen eines Synchronisations- und/oder Datenaustauschpunktes,
- einschreiben einer laufenden Ereignisnummer und des Dateninhaltes des Ereignisses in eine dem jeweiligen Rechnerkanal (R1,...., Rn) zugeordnete **durch** die Zellenadresse bezeichnete Speicherzelle (Zp1..., Zpn) des Kopplungsboards (K),
- prüfen der entsprechenden Speicherzellen (Zp) der Rechnerkanäle (R) auf Vorhandensein übereinstimmender Ereignisnummern,
- lesen der Speicherzellen (Zp) aller Rechnerkanäle (R1,...., Rn), vergleichen untereinander und voten,
- fortsetzen des Programmablaufes der Rechnerkanäle (R1, ...., Rn) und/oder Alarmauslösung in Abhängigkeit vom Votingergebnis.

2. Synchronisations- und/oder Datenaustauschverfahren nach Anspruch 1,
**dadurch gekennzeichnet,**
**daß** der Zugriff auf jede Speicherzelle (Zp) atomar erfolgt derart, daß die gelesenen Daten entweder die Daten vor dem Schreiben oder die Daten nach dem Schreiben, jedoch niemals gemischte Daten sind.

3. Synchronisations- und/oder Datenaustauschverfahren nach Anspruch 1,
**dadurch gekennzeichnet,**
**daß** jeder Rechnerkanal (R) die Möglichkeit hat, Interrupts an ihn selbst temporär oder permanent zu unterbinden.

4. Synchronisations- und/oder Datenaustauschverfahren nach Anspruch 1 oder 2,
**dadurch gekennzeichnet,**
**daß** jeder Rechnerkanal (R) auf den zugeordneten eigenen Speicherbereich (Z) lesend und beschreibend und auf die Speicherbereiche (Z) der anderen Rechnerkanäle (R) nur lesend zugreift.

5. Synchronisations- und/oder Datenaustauschverfahren nach Anspruch 1,
**dadurch gekennzeichnet,**
**daß** zusätzlich zum Programmablauf für die Synchronisation der Austausch von Information ohne Synchronisation erfolgt.

6. Synchronisations- und/oder Datenaustauschverfahren nach Anspruch 1 oder 5,
**dadurch gekennzeichnet,**
**daß** parallel oder zeitlich getrennt zum Synchronisations- und/oder Datenaustauschprogrammablauf der Ablauf von Speicherprüfprogrammen auf den Rechnerkanälen (R) erfolgt, indem die Rechnerkanäle (R) die Prüfergebnisse anhand einer Signatur austauschen und überwachen.

7. Einrichtung zur Synchronisation- und/oder zum Datenaustausch in einem Mehrrechnersystem mit mindestens zwei parallel arbeitenden Rechnerkanälen, die mindestens ihre Ergebnisse durch gegenseitigen Vergleich auf Übereinstimmung überprüfen und innerhalb ihres Programmablaufs Interruptsignale für den Ereignisvergleich aussenden,
**dadurch gekennzeichnet,**
**daß** die Rechnerkanäle (R1,..., Rn) mit mindestens einem Kopplungsboard (K1,...., Kn) verbunden sind, wobei das Kopplungsboard (K1,...., Kn) in n - Speicherbereiche (Z1,...., Zn) und jeder Speicherbereich (Z1,...., Zn) in mindestens n adressierbare Speicherzellen (Zp1, ...., Zpn) unterteilt ist und jeder Speicherbereich (Z1,...., Zn) je einem Rechnerkanal (R1....Rn) zugeordnet ist und die Speicherbereiche (Z1,...., Zn) zum Ereignisvergleich von allen Rechnerkanälen (R1,...., Rn) lesbar aber nur von dem jeweils zugeordneten Rechnerkanal (R) beschreibbar sind.

8. Einrichtung nach Anspruch 7,
**dadurch gekennzeichnet,**
**daß** die Kopplungsboard (K1,...., Kn) passive Kopplungsboard sind.

9. Einrichtung nach Anspruch 7,
**dadurch gekennzeichnet,**
**daß** die Rechnerkanäle (R1, ...., Rn) Industrie-Standard-Rechner mit Standard-CPU-Platinen sind.

## Claims

1. Synchronization and/or data exchange method for secure, high-availability computers in a multi-computer system having at least two computer channels working in parallel, which channels check at least their results for correspondence by means of mutual comparison and, within their program execution, emit interrupt signals for the event comparison, **characterized by** the following method steps:
- assignment of memory areas (Z1,...Zn) of at least one computer-external coupling board (K) to the computer channels (R1,..., Rn),
- identification of at least one synchronization and/or data exchange point in the program execution of each computer channel (R1, ..., Rn) and allocation of an associated cell address,
- outputting of an interrupt signal by each computer channel (R1,..., Rn) when a synchronization and/or data exchange point is reached,
- writing of a current event number and of the data content of the event to a memory cell (Zp1..., Zpn) of the coupling board (K), which memory cell is assigned to the respective computer channel (R1, ..., Rn) and is designated by the cell address,
- checking of the corresponding memory cells (Zp) of the computer channels (R) for the presence of corresponding event numbers,
- reading of the memory cells (Zp) of all the computer channels (R1,..., Rn), comparison among one another and voting,
- continuation of the program execution of the computer channels (R1,... Rn) and/or alarm triggering as a function of the voting result.

2. Synchronization and/or data exchange method according to Claim 1,
**characterized**
**in that** access is made atomically to each memory cell (Zp) in such a way that the data read are either the data prior to writing or the data after writing, but never mixed data.

3. Synchronization and/or data exchange method according to Claim 1,
**characterized**
**in that** each computer channel (R) has the possibility of temporarily or permanently preventing interrupts to itself.

4. Synchronization and/or data exchange method according to Claim 1 or 2,
**characterized**
**in that** each computer channel (R) has read and write access to the assigned dedicated memory area (Z) and only read access to the memory areas (Z) of the other computer channels (R).

5. Synchronization and/or data exchange method according to Claim 1,
**characterized**
**in that**, in addition to the program execution for synchronization, information is exchanged without synchronization.

6. Synchronization and/or data exchange method according to Claim 1 or 5,
**characterized**
**in that**, in parallel with or temporally separately from the synchronization and/or data exchange program execution, memory test programs are executed on the computer channels (R) by the computer channels (R) exchanging and monitoring the test results using a signature.

7. Device for synchronization and/or for data exchange in a multi-computer system having at least two computer channels working in parallel, which channels check at least their results for correspondence by means of mutual comparison and, within their program execution, emit interrupt signals for the result comparison,
**characterized**
**in that** the computer channels (R1,... Rn) are connected to at least one coupling board (K1,..., Kn), in which case the coupling board (K1,... Kn) is subdivided into n memory areas (Z1,..., Zn) and each memory area (Z1,..., Zn) is subdivided into at least n addressable memory cells (Zp1,..., Zpn) and each memory area (Z1,..., Zn) is respectively assigned to a computer channel (R1,... Rn) and the memory areas (Z1,..., Zn), for the result comparison, can be read by all of the computer channels ( R1,..., Rn) but can be written to only by the respectively assigned computer channel (R).

8. Device according to Claim 7,
**characterized**
**in that** the coupling boards (K1, ..., Kn) are passive coupling boards.

9. Device according to Claim 7,
**characterized**
**in that** the computer channels (R1,..., Rn) are industry-standard computers with standard CPU circuit boards.

## Revendications

1. Procédé de synchronisation et/ou d'échange de données pour des ordinateurs sécurisés, insensibles aux défaillances, dans un système multi-ordinateurs comportant au moins deux canaux d'ordinateurs qui travaillent en parallèle, qui vérifient au moins la coïncidence de leurs résultats par comparaison mutuelle et qui émettent à l'intérieur de leur déroulement de programme des signaux d'interruption pour la comparaison d'événements, **caractérisé par** les étapes de procédé suivantes :
- association de zones (Z1, ... Zn) de mémoire d'au moins un tableau (K) de couplage externe à l'ordinateur aux canaux (R1, ..., Rn) d'ordinateurs,
- identification d'au moins un point de synchronisation et/ou d'échange de données dans le déroulement du programme de chaque canal (R1, ..., Rn) d'ordinateur et assignation d'une adresse de cellule associée,
- fourniture d'un signal d'interruption par chaque canal (R1, ..., Rn) d'ordinateur lorsqu'un point de synchronisation et/ou d'échange de données est atteint,
- inscription d'un numéro d'événement en cours et du contenu de données de l'événement dans une cellule (Zp1, ..., Zpn) de mémoire, associée au canal (R1, ..., Rn) d'ordinateur associé, désigné par l'adresse de cellule, du tableau (K) de couplage,
- test des cellules (Zp) de mémoire correspondantes des canaux (R) d'ordinateur pour déterminer la présence de numéro d'événements qui coïncident,
- lecture des cellules (Zp) de mémoire de tous les canaux (R1, ..., Rn) d'ordinateur, comparaison les unes aux autres et vote,
- poursuite du déroulement du programme des canaux (R1, ..., Rn) d'ordinateur et/ou déclenchement d'alerte en fonction du résultat du vote.

2. Procédé de synchronisation et/ou d'échange de données suivant la revendication 1, **caractérisé en ce que** l'accès à chaque cellule (Zp) de mémoire s'effectue de façon atomique, de telle manière que les données lues sont soit les données avant l'écriture, soit les données après l'écriture, mais jamais des données mélangées.

3. Procédé de synchronisation et/ou d'échange de données suivant la revendication 1, **caractérisé en ce que** chaque canal (R) d'ordinateur a la possibilité de supprimer lui-même temporairement ou de manière permanente des interruptions qui lui sont adressées.

4. Procédé de synchronisation et/ou d'échange de données suivant la revendication 1 ou 2, **caractérisé en ce que** chaque canal (R) d'ordinateur accède en lecture et en écriture à la zone (Z) de mémoire propre associée et n'accède qu'en lecture aux zones (Z) de mémoire des autres canaux (R) d'ordinateur.

5. Procédé de synchronisation et/ou d'échange de données suivant la revendication 1, **caractérisé en ce qu'**il s'effectue, en plus du déroulement du programme pour la synchronisation, l'échange d'informations sans synchronisation.

6. Procédé de synchronisation et/ou d'échange de données suivant la revendication 1 ou 5, **caractérisé en ce que**, parallèlement ou de manière séparée dans le temps au déroulement du programme de synchronisation et/ou d'échange de données, le déroulement de programme de test de mémoire sur les canaux (R) d'ordinateur s'effectue du fait que les canaux (R) d'ordinateur échangent, à l'aide d'une signature les résultats de vérification et les surveillent.

7. Dispositif de synchronisation et/ou d'échange de données dans un système multi-ordinateurs comportant au moins deux canaux d'ordinateurs qui travaillent en parallèle, qui vérifient la coïncidence d'au moins leur résultat par comparaison mutuelle et qui émettent à l'intérieur de leur déroulement de programme des signaux d'interruption pour la comparaison d'événements, **caractérisé en ce que** les canaux (R1, ..., Rn) d'ordinateur sont reliés à au moins un tableau (K1, ..., Kn) de couplage, le tableau (K1, ..., Kn) de couplage étant subdivisé en n zones (Z1, ..., Zn) de mémoire et chaque zone (Z1, ..., Zn) de mémoire étant subdivisée en au moins n cellules (Zp1, ..., Zpn) de mémoire adressables et chaque zone (Z1, ..., Zn) de mémoire étant associée chaque fois à un canal (R1, ..., Rn) d'ordinateur et les zones (Z1, ..., Zn) de mémoire pouvant être lues pour la comparaison d'événements par tous les canaux (R1, ..., Rn) d'ordinateurs, mais seul le canal (R) d'ordinateur associé pouvant y écrire.

8. Dispositif suivant la revendication 7, **caractérisé en ce que** les tableaux (K1, ..., Kn) de couplage sont des tableaux de couplage passifs.

9. Dispositif suivant la revendication 7, **caractérisé en ce que** les canaux (R1, ..., Rn) d'ordinateur sont des ordinateurs normalisés industriels à platine CPU normalisée.
